# EUROPEAN PATENT SPECIFICATION

(11) **EP 1 847 738 B1**
(45) Date of publication and mention of the grant of the patent: **07.05.2008**
(21) Application number: 06252112.5
(22) Date of filing: 18.04.2006
(51) Int. Cl.: F16K 1/226, F02D 9/10, F02M 25/07

(54) **EGR valve for an internal combustion engine**
Abgasrückführventil für eine Brennkraftmaschine
Vanne de recirculation de gaz d'échappement pour un moteur à combustion interne

(43) Date of publication of application: 24.10.2007
(73) Proprietor: Delphi Technologies, Inc., Troy, Michigan 48007 (US)
(72) Inventor: Uckun, Karim, 57300 Hagondange (FR); Cantor, Christian, 54720 Lexy (FR)
(74) Representative: Waller, Stephen

(56) References cited:
- EP-A- 1 028 238
- WO-A-97/43538
- WO-A-02/055914
- DE-C1- 19 854 461
- FR-A- 1 150 573
- GB-A- 2 369 571
- US-B1- 6 698 717

## Description

The present invention relates to an exhaust gas recirculation (EGR) valve for an internal combustion engine.

The exhaust gas of an internal combustion engine contains various amounts of unburnt hydrocarbons, carbon monoxide (CO) and nitrous oxides (NOx). Emission of these materials to the atmosphere is undesirable. The problem is more acute in urban areas having a high concentration of motor vehicles.

There are several methods for reducing these harmful exhaust emissions. One such method is exhaust gas recirculation (EGR) systems. These systems are typically employed in automotive vehicles in order to help reduce nitrous oxide (NOx) emissions. EGR systems typically employ an EGR passage disposed between the engine exhaust manifold and the air intake manifold and operable to recirculate exhaust gas from the exhaust side of the engine back to the intake side. An EGR valve is typically provided to selectively control the recirculation of exhaust gas.

It is known to utilise a butterfly valve to selectively close a cylindrical EGR flow passage, said butterfly valve comprising a disc shaped planar valve member pivotally mounted in the flow passage for rotation about an axis perpendicular to a longitudinal axis of the flow passage between an open position, wherein the valve member lies parallel to the longitudinal axis of the flow passage, and a closed position, wherein a peripheral edge of the valve member contacts the inner bore of the flow passage to obscure the flow passage. US 6,698,717 and EP 1 028 238 disclose known butterfly valves.

However, such known EGR valves require very tight manufacturing tolerances to provide a good seal between the peripheral edge the valve member and the inner bore of the flow passage. Moreover, the valve must operate over a wide temperature range and thus differential expansion between the valve parts can lead to failure of the seal between the valve member and the bore of the flow passage.

Furthermore, components left in the exhaust gas due to incomplete combustion may condense within the exhaust and EGR system and stick to and deposit on surfaces exposed to the exhaust gases. This undesired accumulation can result in jamming and/or incomplete closures of the EGR valve.

According to the present invention there is provide an exhaust gas recirculation valve for an internal combustion engine as claimed in claim 1.

Thus reliable closing of the valve does not rely on contact between the peripheral edge of the valve member and the bore and thus reliable sealing is maintained regardless of dimensional tolerances and thermal expansion and contraction of the valve parts, permitting the use of different materials for the valve housing and valve member (e.g. plastic valve member).

The sealing face of each of the first and second valve seat members is provided with a projecting rib or lip extending from or adjacent an inner peripheral edge of the respective valve seat member to be received in a corresponding channel or recess provided in the corresponding portion of the valve member when the valve member is in its closed position.

Preferably a face of the or each valve seat member opposite said sealing face is tapered to guide air flow over the valve seat member.

In one embodiment the valve member may comprise a planar disc and the bore may be cylindrical in shape. However, other cross sectional shapes are envisaged for the bore defining the flow passage.

Preferably the valve member is formed from a polymeric material.

The valve member is dimensioned with respect to the bore such that a gap is maintained between the outer peripheral edge of the valve member and the bore when the valve member is in its closed position. Preferably said gap is at least 0.5mm.

An embodiment of the invention will now be described, by way of example only, with reference to the drawings, in which:
Figure 1 is a perspective view of a prior art EGR valve;
Figure 2 is a perspective view of the known EGR valve of Figure 1 moving towards a closed position;
Figure 3 is perspective view of an EGR valve according to an embodiment of the present invention;
Figure 4 is a perspective view of the valve member of the EGR valve of Figure 3, and;
Figure 5 is a sectional view of the EGR valve of Figure 3 showing the valve member in its closed position.

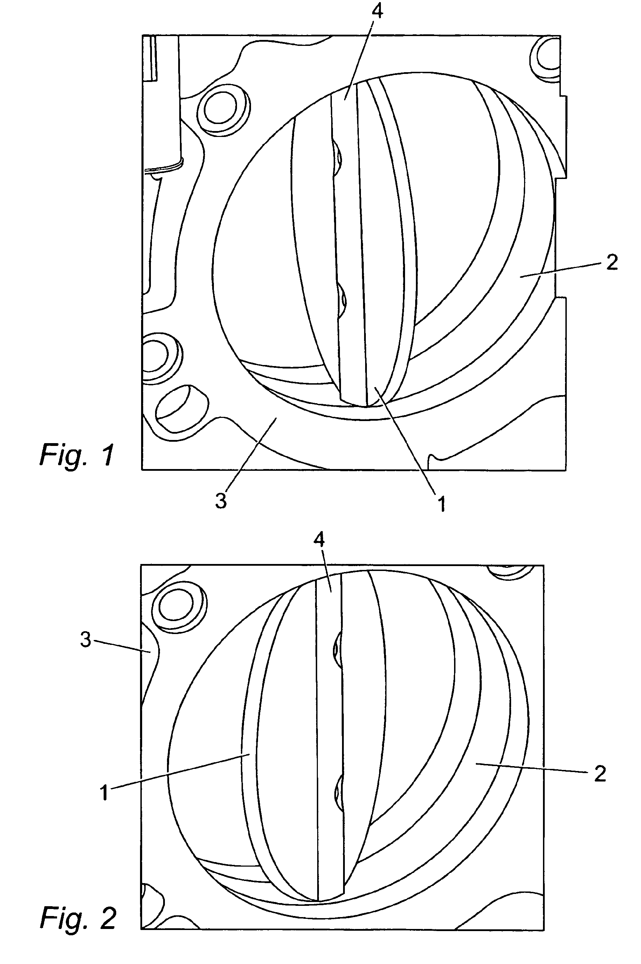

As shown in Figures 1 and 2, a known EGR valve of the butterfly type comprises a disc shaped valve member 1 rotatably mounted in a cylindrical bore 2 in a valve housing 3 defining a flow passage about a pivot axis transverse to the flow passage. The valve member is pivotable about a pivot axis 4 between an open position (shown in Figure 1), wherein the valve member 1 is positioned parallel to the direction of flow of gases through the flow passage to provide minimal flow restriction, and a closed position, wherein the peripheral edge of the valve member 1 contacts the inner surface of the bore 2 to obscure the flow passage.

In order to obtain a reliable seal, accurate machining of the valve member 1 and bore 2 is required. Even where such accurate machining is achieved, differential thermal expansion of the valve parts and the accumulation of deposits thereon can lead to leakages between the valve member 1 and bore 2.

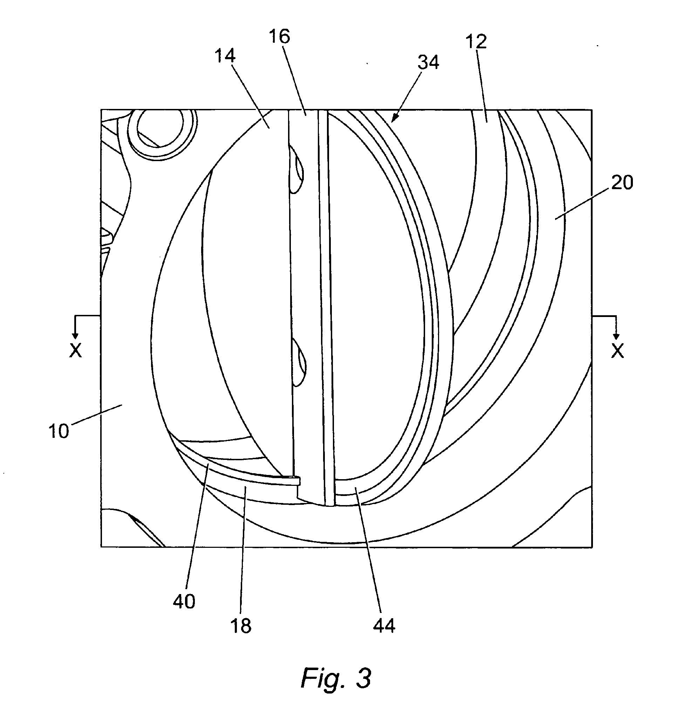

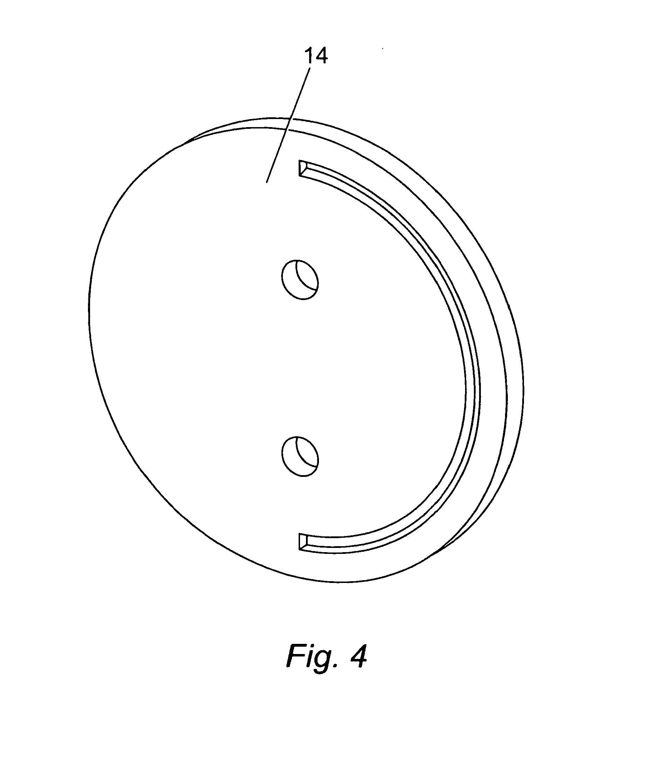

A preferred embodiment of the present invention is shown in Figures 3 to 5. A valve housing 10 has a cylindrical bore 12 defining a flow passage. A disc shaped valve member 14 is pivotally mounted within the cylindrical bore 12 about a pivot axis 16 transverse to said bore 12.

First and second arcuate valve seat members 18,20 are provided in the bore 12, each extending through an arc of nearly 180°, diametrically opposed to one another transverse to the pivot axis 16 of the valve member 14.

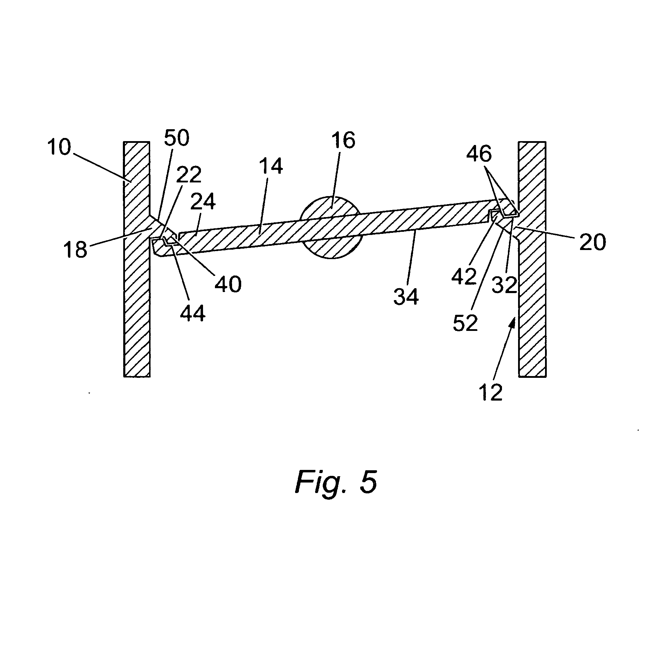

As best shown in Figure 5, a sealing face 22 of said first valve seat member 18 cooperates with a portion of a first side 24 of the valve member 14 and a sealing face 32 of said second valve portion 20 cooperates with a portion of a second side 34 of the valve member 14 when the valve member 14 is in its closed position to ensure a gas tight seal between the valve member 14 and the cylindrical bore 12 of the valve housing 10.

In order to provide a reliable seal, an axially extending lip 40,42 is provided around the peripheral edge of the sealing face 22,32 on each valve seat member 18,20, each lip 40,42 being receivable is a corresponding channel or recess 44,46 provided in the corresponding portion of the valve member 14 when the valve member 14 is in its closed position.

In order to minimise restriction to exhaust gas flow when the valve member 14 is in its open position, the rear faces 50,52 of the valve seat members 18,20 are tapered, as best shown in Figure 5.

Various modifications and variations to the described embodiments of the inventions will be apparent to those skilled in the art without departing from the scope of the invention as defined in the appended claims. Although the invention has been described in connection with specific preferred embodiments, it should be understood that the invention as claimed should not be unduly limited to such specific embodiments.

## Claims

1. An exhaust gas recirculation (EGR) valve for an internal combustion engine, said valve comprising a housing (10) having a bore (12) defining an exhaust gas flow passage, a valve member (14) being pivotally mounted within the bore (12) for pivotal movement about an axis (16) transverse to a longitudinal axis of the flow passage between an open position, wherein the valve member (14) is arranged substantially parallel to said longitudinal axis of the flow passage to permit the flow of exhaust gases therethrough, and a closed position, wherein the valve member (14) obscures the flow passage to prevent the flow of exhaust gases therethrough, first and second inwardly extending arcuate valve seat members (18,20) being provided in the bore (12) of the flow passage diametrically opposed to one another transverse to the pivot axis (16) of the valve member (14), a sealing face (22) of said first valve seat member (18) cooperating with a portion of a first side (24) of the valve member (14) and a sealing face (32) of said second valve seat member (20) cooperating with a portion of a second side (34) of the valve member (14) when the valve member (14) is in its closed position, **characterised in that** the sealing face (22,32) of each of the first and second valve seat members (18,20) is provided with a projecting rib or lip (40,42) extending from or adjacent an inner peripheral edge of the respective valve seat member (18,20) to be received in a corresponding channel or recess (44,46) provided in the corresponding portion of the valve member (14) when the valve member (14) is in its closed position, and wherein the valve member (14) is dimensioned with respect to the bore (12) such that a gap is maintained between the outer peripheral edge of the valve member (14) and the bore (12) when the valve member (14) is in its closed position.

2. An EGR valve as claimed in claim 1, wherein a face (50,52) of the or each valve seat member (18,20) opposite said sealing face (22,32) is tapered to guide air flow over the valve seat member (18,20).

3. An EGR valve as claimed in any preceding claim, wherein the valve member (14) comprises a planar disc and the bore (12) is cylindrical in shape.

4. An EGR valve as claimed in any preceding claim, wherein the valve member (14) is formed from a polymeric material.

5. An EGR valve as claimed in any preceding claim, wherein said gap is at least 0.5mm.

## Patentansprüche

1. Ein Abgasrückführungsventil (RGE-Ventil) für einen Verbrennungsmotor, wobei das Ventil Folgendes beinhaltet:
ein Gehäuse (10) mit einer Bohrung (12), die einen Abgasdurchflussdurchgang definiert, ein Ventilelement (14), das zur schwenkbaren Bewegung um eine Achse (16) transversal zu einer Längsachse des Durchflussdurchgangs zwischen einer offenen Position, in der das Ventilelement (14) im Wesentlichen parallel zu der Längsachse des Durchflussdurchgangs angeordnet ist, um den Durchfluss von Abgasen durch diesen zu erlauben, und einer geschlossenen Position, in der das Ventilelement (14) den Durchflussdurchgang verdeckt, um den Durchfluss von Abgasen durch diesen zu verhindern, schwenkbar innerhalb der Bohrung (12) montiert ist, ein erstes und ein zweites sich nach innen erstreckendes bogenförmiges Ventilsitzelement (18, 20), die in der Bohrung (12) des Durchflussdurchgangs diametrisch einander gegenüberliegend transversal zu der Schwenkachse (16) des Ventilelements (14) bereitgestellt sind, eine Dichtfläche (22) des ersten Ventilsitzelements (18), das mit einem Abschnitt einer ersten Seite (24) des Ventilelements (14) zusammenwirkt, und eine Dichtfläche (32) des zweiten Ventilsitzelements (20), das mit einem Abschnitt einer zweiten Seite (34) des Ventilelements (14) zusammenwirkt, wenn sich das Ventilelement (14) in seiner geschlossenen Position befindet, **dadurch gekennzeichnet, dass** die Dichtfläche (22, 32) von jedem von dem ersten und dem zweiten Ventilsitzelement (18, 20) mit einer vorspringenden Rippe oder Lippe (40, 42) versehen ist, die sich von einer inneren peripheren Kante des jeweiligen Ventilsitzelements (18, 20) erstreckt oder angrenzend daran ist, um in einem dazugehörigen Kanal oder einer dazugehörigen Aussparung (44, 46), der/die in dem dazugehörigen Abschnitt des Ventilelements (14) bereitgestellt ist, aufgenommen zu werden, wenn sich das Ventilelement (14) in seiner geschlossenen Position befindet, und wobei das Ventilelement (14) mit Bezug auf die Bohrung (12) bemessen ist, so dass eine Lücke zwischen der äußeren peripheren Kante des Ventilelements (14) und der Bohrung (12) beibehalten wird, wenn sich das Ventilelement (14) in seiner geschlossenen Position befindet.

2. RGE-Ventil gemäß Anspruch 1, wobei eine Fläche (50, 52) von dem oder von jedem Ventilsitzelement (18, 20) gegenüberliegend der Dichtfläche (22, 32) konisch ist, um Luftstrom über das Ventilsitzelement (18, 20) zu lenken.

3. RGE-Ventil gemäß einem der vorhergehenden Ansprüche, wobei das Ventilelement (14) eine planare Scheibe beinhaltet und die Bohrung (12) in der Form zylindrisch ist.

4. RGE-Ventil gemäß einem der vorhergehenden Ansprüche, wobei das Ventilelement (14) aus einem Polymermaterial gebildet ist.

5. RGE-Ventil gemäß einem der vorhergehenden Ansprüche, wobei die Lücke mindestens 0,5 mm beträgt.

## Revendications

1. Une soupape de recirculation de gaz d'échappement (RGE) destinée à un moteur à combustion interne, ladite soupape comprenant un logement (10) présentant un alésage (12) définissant un passage d'écoulement de gaz d'échappement, un élément de soupape (14) monté de façon à pivoter au sein de l'alésage (12) pour se déplacer par pivotement autour d'un axe (16) transversal à un axe longitudinal du passage d'écoulement entre une position ouverte, dans laquelle l'élément de soupape (14) est agencé de façon substantiellement parallèle audit axe longitudinal du passage d'écoulement pour permettre l'écoulement de gaz d'échappement à travers celui-ci, et une position fermée, dans laquelle l'élément de soupape (14) masque le passage d'écoulement pour empêcher l'écoulement de gaz d'échappement à travers celui-ci, des premier et deuxième éléments formant sièges de soupape arqués qui s'étendent vers l'intérieur (18, 20) fournis dans l'alésage (12) du passage d'écoulement de façon diamétralement opposée l'un à l'autre transversalement à l'axe de pivotement (16) de l'élément de soupape (14), une face d'étanchéité (22) dudit premier élément formant siège de soupape (18) coopérant avec une portion d'un premier côté (24) de l'élément de soupape (14) et une face d'étanchéité (32) dudit deuxième élément formant siège de soupape (20) coopérant avec une portion d'un deuxième côté (34) de l'élément de soupape (14) lorsque l'élément de soupape (14) est dans sa position fermée, **caractérisée en ce que** la face d'étanchéité (22, 32) de chacun des premier et deuxième éléments formant sièges de soupape (18, 20) est pourvue d'une nervure ou lèvre (40, 42) faisant saillie s'étendant depuis ou adjacente à un bord périphérique interne de l'élément formant siège de soupape respectif (18, 20) pour être reçue dans un canal ou renfoncement (44, 46) correspondant fourni dans la portion correspondante de l'élément de soupape (14) lorsque l'élément de soupape (14) est dans sa position fermée, et dans laquelle l'élément de soupape (14) est dimensionné par rapport à l'alésage (12) de telle sorte qu'un écart soit maintenu entre le bord périphérique externe de l'élément de soupape (14) et l'alésage (12) lorsque l'élément de soupape (14) est dans sa position fermée.

2. Une soupape RGE telle que revendiquée dans la revendication 1, dans laquelle une face (50, 52) de l'élément formant siège de soupape ou de chaque élément formant siège de soupape (18, 20) opposée à ladite face d'étanchéité (22, 32) est effilée pour guider l'écoulement d'air par-dessus l'élément formant siège de soupape (18, 20).

3. Une soupape RGE telle que revendiquée dans n'importe quelle revendication précédente, dans laquelle l'élément de soupape (14) comprend un disque planaire et l'alésage (12) est de configuration cylindrique.

4. Une soupape RGE telle que revendiquée dans n'importe quelle revendication précédente, dans laquelle l'élément de soupape (14) est formé à partir d'un matériau polymère.

5. Une soupape RGE telle que revendiquée dans n'importe quelle revendication précédente, dans laquelle ledit écart est d'au moins 0,5 mm.
